# EUROPÄISCHE PATENTSCHRIFT

(11) **EP 1 213 180 B1**
(45) Veröffentlichungstag und Bekanntmachung des Hinweises auf die Patenterteilung: **20.08.2008**
(21) Anmeldenummer: 01123704.7
(22) Anmeldetag: 04.10.2001
(51) Int. Cl.: B60Q 1/40

(54) **Lenkstockschalter für ein Kraftfahrzeug**
Steering column switch for vehicle
Commutateur de colonne de direction pour véhicule

(30) Priorität: 16.10.2000 DE 10051226
(43) Veröffentlichungstag der Anmeldung: 12.06.2002
(73) Patentinhaber: Delphi Technologies Inc., Troy, MI 48007 (US)
(72) Erfinder: Hulbert, Thomas, 67575 Eich (DE); Rudolph, Gerd, 55459 Aspisheim (DE)
(74) Vertreter: Becker, Bernd

(56) Entgegenhaltungen:
- EP-A- 0 853 022
- EP-A- 1 006 038
- DE-A1- 3 532 532
- DE-A1- 19 942 818
- DE-C1- 4 426 644
- DE-C1- 19 942 247

## Beschreibung

Die Erfindung bezieht sich auf einen Lenkstockschalter für ein Kraftfahrzeug mit einem Zentralstecker zur elektrischen Kopplung mit einer Zentralbuchse des Bordnetzes sowie einer unterseitigen Zentrierhülse mit einer Befestigungsvorrichtung zur Festlegung an einem Mantelrohr, die ein auf das Mantelrohr wirkendes Klemmteil und eine Aufnahme zur Führung und Halterung des Klemmteils umfasst, an dem eine Sicherungsvorrichtung zur Festlegung der Zentralbuchse auf dem Zentralstecker angeordnet ist.

Ein derartiger Lenkstockschalter ist aus der EP 0 853 022 A2 bekannt.

Im Weiteren zeigt die DE 197 11 561 A1 einen Lenkstockschalter mit einer Haltevorrichtung, die eine auf ein Mantelrohr aufsteckbare Zentrierhülse aufweist. Der Lenkstockschalter umfasst einen Zentralstecker für ein Daten-Bus-System, der sich ungeschützt gegen unbefugte Manipulation an dessen Unterseite befindet.

Die DE 198 42 225 A1 offenbart einen Lenkstockschalter, in den mehrere Einzelschalter, eine Leiterplatte mit elektrischen Anschlüssen und elektronischen Bauteilen sowie ein Zündschloss mit zugeordneter Transponderspule für eine Wegfahrsperre integriert sind. Der Lenkstockschalter umfasst ein Gehäuseunterteil, das mit einer Lenksäule verschraubt ist, wobei die Schrauben nur von der Innenseite des von einem Gehäuseoberteil überdeckten Gehäuseunterteils zugänglich sind. Die Leiterplatte weist einen mehrpoligen Zentralstecker auf, auf den eine kabelbaumseitige Zentralbuchse verrastend aufgesteckt wird. Diese Steckverbindung ist innerhalb des durch das Gehäuseunterteil und das Gehäuseoberteil gebildeten Gehäuses angeordnet, weshalb sie nur bei abgenommenen Lenkrad mittels eines Spezialwerkzeugs gelöst werden kann. Diese Anordnung der Steckverbindung bietet zwar ein hohes Maß an Sicherheit gegen unbefugte Manipulation an der elektrischen Steckverbindung, sie erweist sich aber als wartungs- bzw. reparaturunfreundlich. Um an die Steckverbindung zu gelangen, ist es erforderlich, zuerst das Lenkrad zu entfernen und anschließend den Lenkstockschalter zu demontieren, was mit einem erheblichen Arbeitsaufwand verbunden ist und oftmals mit einer Beschädigung einzelner Bauteile des Lenkstockschalters einhergeht.

Es ist Aufgabe der Erfindung, einen Lenkstockschalter der eingangs genannten Art zu schaffen, der bei der Montage das Bordnetz vor unbefugter Manipulation sichert.

Erfindungsgemäß wird die Aufgabe dadurch gelöst, dass das Klemmteil eine in eine langlochförmige Aussparung des Mantelrohrs kraft- sowie formschlüssig eingreifbare keilförmig ausgebildet Nase umfasst.

Der Befestigungsvorrichtung des Lenkstockschalters sind somit zwei Funktionen zugewiesen, nämlich zum einen die Festlegung des Lenkstockschalters an dem Mantelrohr mittels des Klemmteils und zum anderen die Sicherung der durch die Zentralbuchse und den Zentralstecker realisierten elektrischen Verbindung des Lenkstockschalters mit dem Bordnetz vor unbefugter Manipulation durch die Sicherungsvorrichtung. Mit der Sicherungsvorrichtung wird das Abziehen der Zentralbuchse des Bordnetzes von dem Zentralstecker des Lenkstockschalter verhindert bzw. erheblich erschwert, weshalb eine hinreichende Sicherung vor unbefugter Manipulation gewährleistet ist. Eine solche Sicherung der elektrischen Steckverbindung ist unabdingbar, um das Kraftfahrzeug vor Diebstahl zu schützen, da in einem modernen Lenkstockschalter neben anderen Bauteilen auch die Transponderspule für die Wegfahrsperre angeordnet ist. Um das Kraftfahrzeug in einen fahrbereiten Zustand zu versetzen, ist es denkbar, ein Elektronikbauteil mit der von dem Zentralstecker des Lenkstockschalters abgezogenen Zentralbuchse des Bordnetzes zu verbinden, das die Wegfahrsperre ausschaltet. Zur Reduzierung der bei der Montage zu handhabenden Einzelteile der Befestigungsvorrichtung ist die Sicherungsvorrichtung an dem Klemmteil angeordnet. Die keilförmige Nase des Klemmteils dient zum Ausgleich von Toleranzen, die bei der Fertigung des Lenkstockschalters und der Aussparung des Mantelrohrs zu berücksichtigen sind. Um eine lagegenaue und zuverlässige Befestigung des Lenkstockschalters sicherzustellen, weist die Befestigungsvorrichtung eine Aufnahme zur Führung und Halterung des Klemmteils auf.

Bevorzugt ist das Klemmteil mit einer Schraubverbindung in der tangential an der Zentrierhülse angeordneten Aufnahme befestigt. Die Schraubverbindung gewährleistet eine sichere und einfache Befestigung des Lenkstockschalters, die aber ohne spezielles Werkzeug nicht zu lösen ist.

Um einen relativ guten Zugang zu der Befestigungsvorrichtung sicherzustellen, ist zweckmäßigerweise das Klemmteil winkelversetzt zu dem Zentralstecker und der Zentralbuchse angeordnet.

Bevorzugt sind die Sicherungsvorrichtung und das Klemmteil einstückig ausgebildet. Die Sicherungsvorrichtung und das Klemmteil lassen sich somit im Spritzgußverfahren kostengünstig aus Kunststoff herstellen.

Nach einer Weiterbildung des Erfindungsgedankens umfasst die Sicherungsvorrichtung einen im wesentlichen U-förmigen Bügel, der nach der Festlegung des Klemmteils zumindest bereichsweise einen Kragen der auf den Zentralstecker aufgesteckten Zentralbuchse übergreift. Der im wesentlichen U-förmige Bügel gelangt beim Festziehen des Klemmteils in einen Bereich oberhalb des Kragens der auf den Zentralstecker aufgesteckten Zentralbuchse und verhindert mit seinen beiden Schenkeln ein Abziehen der Zentralbuchse von dem Zentralstecker.

Nach einer ersten alternativen Weiterbildung des Erfindungsgedankens umfasst die Sicherungsvorrichtung einen im wesentlichen L-förmigen Bügel sowie einen von dem Bügel überdeckten Klipsarm, wobei der Bügel nach der Festlegung des Klemmteils zumindest bereichsweise den Kragen der auf den Zentralstecker aufgesteckten Zentralbuchse übergreift und der Klipsarm in eine korrespondierende Aussparung der Zentralbuchse eingreift. Somit ist eine doppelte Sicherung der Zentralbuchse vor dem Abziehen von dem Zentralstecker realisiert, die zum einen aus dem den Kragen der Zentralbuchse überspannenden Bügel und zum anderen aus dem in die Aussparung der Zentralbuchse eingreifenden Klipsarm besteht. Diese doppelte Sicherung erschwert das Lösen der Zentralbuchse von dem Zentralstecker erheblich.

Nach einer zweiten alternativen Weiterbildung des Erfindungsgedankens umfasst die Sicherungsvorrichtung einen parallel zur Schraubverbindung des Klemmteils ausgerichteten Stift, der nach der Festlegung des Klemmteils in eine korrespondierende Öffnung der auf den Zentralstecker aufgesteckten Zentralbuchse eingreift. Der Stift greift aufgrund seiner Ausrichtung beim Festziehen des Klemmteils in die Öffnung ein und sichert somit die Zentralbuchse vor dem Abziehen von dem Zentralstecker.

Zweckmäßigerweise ist die Öffnung in einen an den Kragen der Zentralbuchse angeformten Steg eingelassen. Daher ist es nicht erforderlich, den Kragen selbst mit einer Öffnung zu versehen.

Nach einer dritten alternativen Weiterbildung des Erfindungsgedankens umfasst die Sicherungsvorrichtung einen parallel zu einer Stirnseite der Zentralbuchse ausgerichteten Klipsarm, der nach der Festlegung des Klemmteils beim Aufstecken der Zentralbuchse auf den Zentralstecker in eine korrespondierende Aussparung der Zentralbuchse eingreift. Bei dieser Ausgestaltung der Sicherungsvorrichtung wird zuerst das Klemmteil und somit der Lenkstockschalter befestigt und anschließend wird die Zentralbuchse auf den Zentralstecker aufgesteckt, wobei der Klipsarm in die Aussparung der Zentralbuchse gelangt und diese vor dem Abziehen sichert.

Zweckmäßigerweise ist die Aussparung in den Kragen der Zentralbuchse eingelassen. Somit kann der Kragen mitsamt der Aussparung in einem Arbeitsgang gefertigt werden.

Um ein einfaches Lösen des Klipsarms durch Hintergreifen mit einem Werkzeug zu verhindern, ist bevorzugt die Aussparung durch eine die freie Stirnseite des Klipsarms überdeckende Wandung begrenzt ist.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im folgenden anhand eines Ausführungsbeispieles unter Bezugnahme auf die zugehörigen Zeichnungen näher erläutert. Es zeigen:

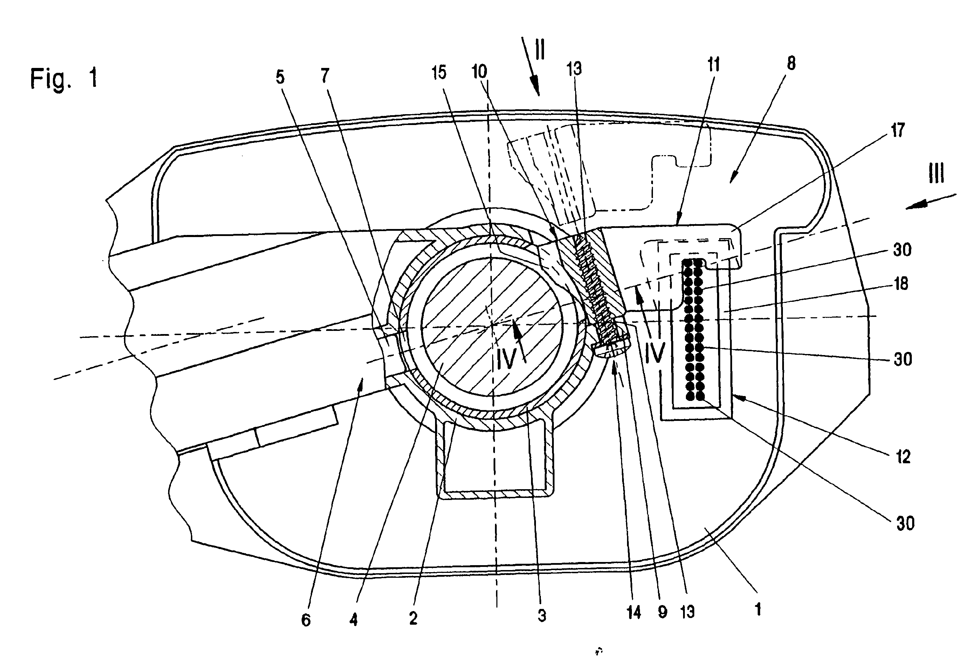

- Fig.1: eine Darstellung eines erfindungsgemäßen Lenkstockschalters im Teilschnitt,

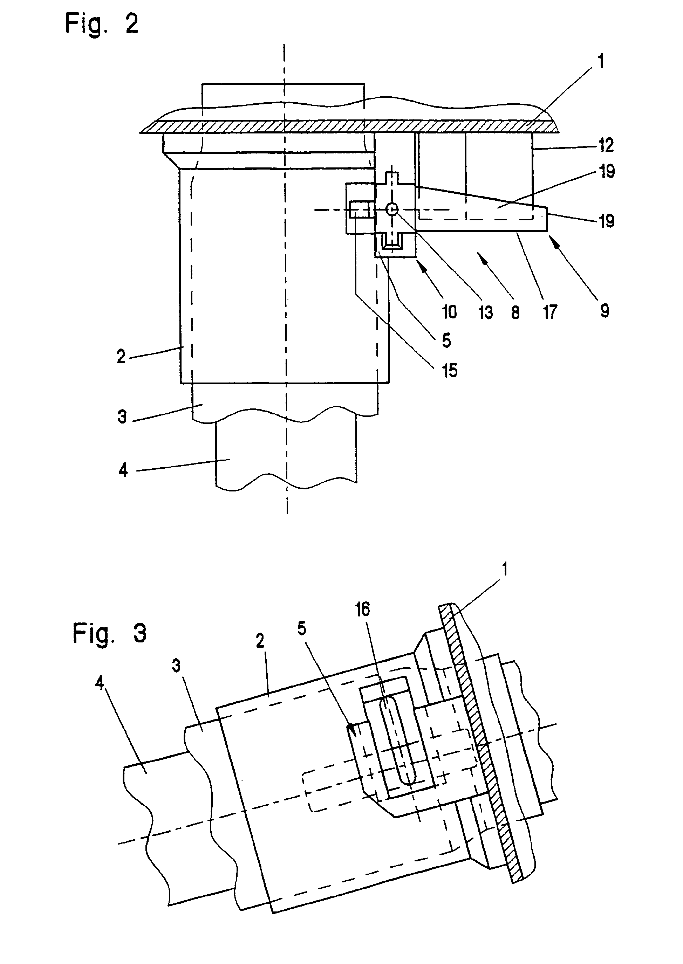

- Fig.2: eine Darstellung gemäß Fig. 1 in Richtung des Pfeils II,
- Fig.3: eine Darstellung gemäß Fig. 1 in Richtung des Pfeils III,
- Fig.4: einen Schnitt durch die Darstellung nach Fig. 1 gemäß der Linie IV-IV,
- Fig.5: eine Darstellung einer ersten alternativen Ausführungsform des Lenkstockschalters,
- Fig.6: eine Darstellung einer zweiten alternativen Ausführungsform des Lenkstockschalters,
- Fig.7: eine Darstellung einer dritten alternativen Ausführungsform des Lenkstockschalters und
- Fig.8: einen Schnitt durch die Darstellung nach Fig. 7 gemäß der Linie VIII-VIII.

Der Lenkstockschalter umfasst eine an seinem Gehäuseunterteil 1 angeformte Zentrierhülse 2, die ein Mantelrohr 3 einer Lenksäule 4 bereichsweise übergreift. An der Zentrierhülse 2 ist zum einen eine Aufnahme 5 für eine Schließmechanik 6, die zu einem Eingriff 7 des Mantelrohrs 3 korrespondiert und zum anderen eine Befestigungsvorrichtung 8 zur Festlegung des Lenkstockschalters an dem Mantelrohr 3 angeordnet.

Die Befestigungsvorrichtung 8 umfasst eine tangential an der Zentrierhülse 2 angeformte Aufnahme 9 zur Führung und Halterung eines Klemmteils 10 sowie eine Sicherungsvorrichtung 11 zur Festlegung einer mit dem Bordnetz verbundenen Zentralbuchse 12 auf einem mit einer nicht dargestellten Leiterplatte des Lenkstockschalters verbundenen Zentralstecker, der in den Darstellungen der Fig. stets komplett von der mehrpoligen Zentralbuchse 12 überdeckt und daher nicht sichtbar ist. Von der Zentralbuchse 12 führen Leitungen 30 zum Bordnetz des Kraftfahrzeugs. Die Aufnahme 9 ist derart an der Zentrierhülse 2 angeordnet, dass das Klemmteil 10 winkelversetzt zu der Zentralbuchse 12 sowie dem Zentralstecker ausgerichtet ist.

Das Klemmteil 10 weist, ebenso wie die Aufnahme 9, eine Bohrung 13 für eine Schraubverbindung 14 auf. An das Klemmteil 10 ist eine im wesentlichen keilförmige Nase 15 angeformt, die in eine korrespondierende Aussparung 16 des Mantelrohrs 3 eingreift, um den Lenkstockschalter kraft- und formschlüssig an dem Mantelrohr 3 zu befestigen. Durch den Eingriff der keilförmigen Nase 15 in die langlochförmige Aussparung 16 ist es möglich, fertigungsbedingte Form- und Lagetoleranzen auszugleichen.

An dem Klemmteil 10 ist auf der der Nase 15 gegenüberliegenden Seite die Sicherungsvorrichtung 11 angeformt, die einen im wesentlichen U-förmigen Bügel 17 umfasst. Die Schenkel des Bügels 17 übergreifen bereichsweise einen Kragen 18 der Zentralbuchse 12, wenn diese auf den nicht sichtbaren Zentralstecker aufgesteckt und das Klemmteil 10 mittels der Schraubverbindung 14 in der Aufnahme festgelegt ist. Von den Schenkeln erstrecken sich Wandungen 19 in Richtung des Lenkstockschalters, die den Kragen 18 der Zentralbuchse 12 bereichsweise umfangsseitig mit Spiel umgreifen.

Bei der Montage des Lenkstockschalters wird dieser mit der Zentrierhülse 2 auf das Mantelrohr 3 aufgesetzt. Anschließend wird die mit einem die Leitungen 30 umfassenden Kabelbaum des Bordnetzes verbundene Zentralbuchse 12 auf den Zentralstecker des Lenkstockschalters aufgesteckt und geht hierbei eine nicht dargestellte Klipsverbindung ein. Die Festlegung des Lenkstockschalters an dem Mantelrohr 3 erfolgt mittels des Klemmteils 10 der Befestigungsvorrichtung 8. Das Klemmteil 10 wird mit der Schraubverbindung 14 in die Aufnahme 5 gezogen, bis seine keilförmige Nase 15 in der Aussparung 16 des Mantelrohrs 3 kraft- und formschlüssig einliegt. Mit dem Klemmteil 10 wird auch die Sicherungsvorrichtung 11 in Richtung der Aufnahme 9 gezogen, wobei deren Bügel 11 in einen Bereich oberhalb des Kragens 18 der Zentralbuchse 12 gelangt. Um an dieser Steckverbindung von Zentralbuchse 12 und Zentralstekker Manipulationen an dem Bordnetz des Kraftfahrzeugs vorzunehmen, die zu dessen Diebstahl führen können, ist es erforderlich, das Klemmteil 10 zusammen mit der Sicherungsvorrichtung 11 zu entfernen und anschließend die Zentralbuchse 12 von dem Zentralstecker abzuziehen, was nur unter einem erheblichen Zeitaufwand möglich ist.

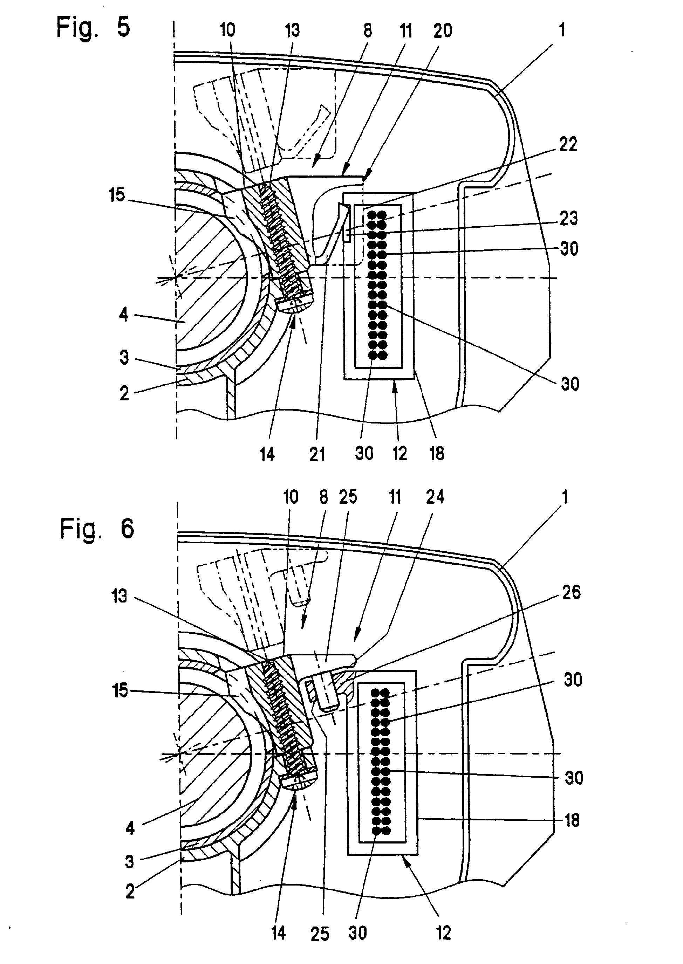

In einer ersten alternativen Ausgestaltung gemäß Fig. 5 ist das Klemmteil 10 der Befestigungsvorrichtung 8 identisch mit dem zuvor beschriebenen. Die Sicherungsvorrichtung 11 umfasst einen im wesentlichen L-förmigen Bügel 20, der an der der Nase 15 des Klemmteils 10 gegenüberliegenden Seite an dem Klemmteil 10 angeformt ist. An dem dem Klemmteil 10 zugewandten Schenkel des Bügels 20 ist ein Klipsarm 21 angeordnet. Bei auf den Zentralstecker aufgesteckter Zentralbuchse 12 übergreift eine über den Schenkeln des Bügels 20 aufgespannte, lediglich angedeutete Wand 22 den Kragen 18 der Zentralbuchse 12 bereichsweise. Darüberhinaus greift der Klipsarm 21 in eine in den Kragen 18 eingelassene Aussparung 23 ein.

Die Montage des Lenkstockschalters erfolgt wie bereits erläutert. Die erste alternative Sicherungsvorrichtung 11 umfasst lediglich eine doppelte Sicherung gegen unbefugtes Abziehen der Zentralbuchse 12 von den Zentralstecker, nämlich zum einen den Bügel 20 und zum anderen den Klipsarm 21, die beide bei festgelegtem Klemmteil 10 sichernd auf die Zentralbuchse 12 wirken.

In einer zweiten alternativen Ausführung nach Fig. 6 umfasst die Sicherungsvorrichtung 11 einen parallel zur Schraubverbindung 14 ausgerichteten Stift 24, der an einem an dem Klemmteil 10 angeformten Ausleger 25 befestigt ist. Beim Befestigen des Klemmteils 10 mittels der Schraubverbindung 14 gelangt der Stift 24 bei auf den Zentralstecker aufgesteckter Zentralbuchse 12 in eine Öffnung 25, die in einen an den Kragen 18 der Zentralbuchse 12 angeformten Steg 26 eingelassen ist. Somit ist das Abziehen der Zentralbuchse 12 von dem Zentralstecker bei festgelegtem Klemmteil 10 nicht möglich.

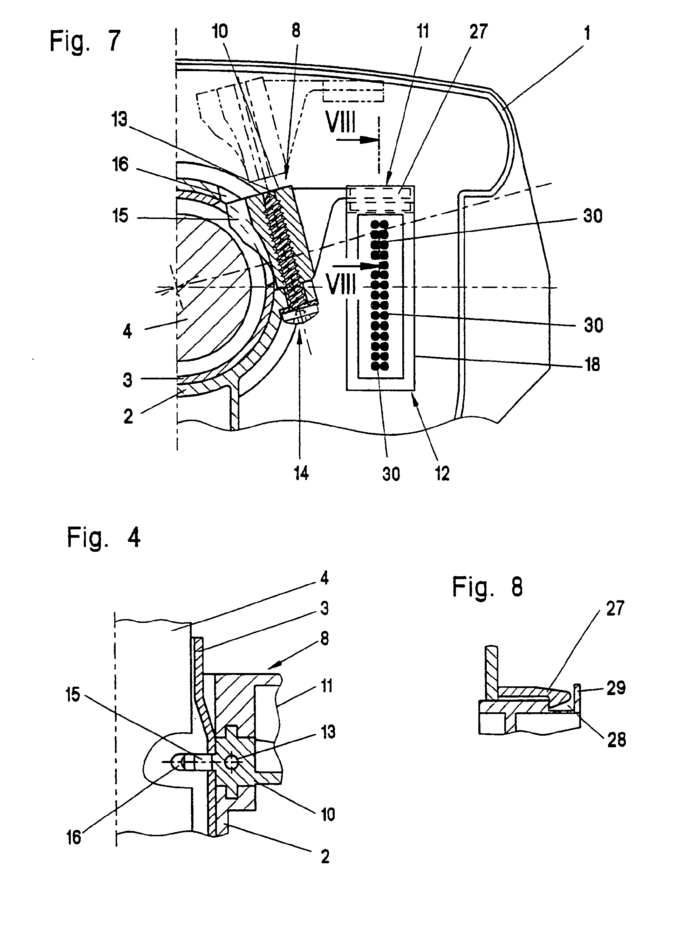

In einer dritten alternativen Ausführung gemäß den Fig. 7 und 8 umfasst die Sicherungsvorrichtung 11 einen an das Klemmteil 10 angeformten Klipsarm 27, der sich parallel zu einer schmalen Stirnseite der Zentralbuchse 12 erstreckt.

Bei der Montage des Lenkstockschalters wird dieser mit der Zentrierhülse 2 auf das Mantelrohr 3 aufgesetzt und mit dem Klemmteil 10 an dem Mantelrohr 3 festgelegt. Anschließend wird die mit dem Kabelbaum des Bordnetzes verbundene Zentralbuchse 12 auf den Zentralstecker des Lenkstockschalters aufgesteckt und geht hierbei zum einen eine nicht dargestellte Klipsverbindung mit dem Zentralstecker und zum anderen eine Klipsverbindung mit dem Klipsarm 27 der Sicherungsvorrichtung 11 ein. Hierbei greift das freie Ende des Klipsarms 27 in eine in den Kragen 18 der Zentralbuchse 12 eingelassen Aussparung 28 ein. Damit diese Klipsverbindung nicht durch einfaches Hintergreifen des Klipsarms 27 mit einem geeigneten Werkzeug gelöst werden kann, ist die Aussparung 28 durch eine die freie Stirnseite des Klipsarms 27 überdeckende Wandung 29 begrenzt.

## Patentansprüche

1. Lenkstockschalter für ein Kraftfahrzeug mit einem Zentralstecker zur elektrischen Kopplung mit einer Zentralbuchse (12) des Bordnetzes sowie einer unterseitigen Zentrierhülse (2) mit einer Befestigungsvorrichtung (8) zur Festlegung an einem Mantelrohr (3), die ein auf das Mantelrohr (3) wirkendes Klemmteil (10) und eine Aufnahme (9) zur Führung und Halterung des Klemmteils (10) umfasst, an dem eine Sicherungsvorrichtung (11) zur Festlegung der Zentralbuchse (12) auf dem Zentralstecker angeordnet ist, **dadurch gekennzeichnet, dass** das Klemmteil (10) eine in eine langlochförmige Aussparung (16) des Mantelrohrs (3) kraft- sowie formschlüssig eingreifbare keilförmig ausgebildet Nase (15) umfasst.

2. Lenkstockschalter nach Anspruch 1, **dadurch gekennzeichne**t, **dass** das Klemmteil (10) mit einer Schraubverbindung (14) in der tangential an der Zentrierhülse (2) angeordneten Aufnahme (9) befestigt ist.

3. Lenkstockschalter nach Anspruch 2, **dadurch gekennzeichnet, dass** eine Längsachse der Schraubverbindung (14) des Klemmteils (10) winkelversetzt zu dem Zentralstecker und der Zentralbuchse (12) angeordnet ist.

4. Lenkstockschalter nach Anspruch 1, **dadurch gekennzeichnet, dass** die Sicherungsvorrichtung (11) und das Klemmteil (10) einstückig ausgebildet sind.

5. Lenkstockschalter nach einem der Ansprüche 1 bis 4,
**dadurch gekennzeichnet, dass** die Sicherungsvorrichtung (11) einen im wesentlichen U-förmigen Bügel (17) umfasst, der nach der Festlegung des Klemmteils (10) zumindest bereichsweise einen Kragen (18) der auf den Zentralstecker aufgesteckten Zentralbuchse (12) übergreift.

6. Lenkstockschalter nach einem der Ansprüche 1 bis 4,
**dadurch gekennzeichnet, dass** die Sicherungsvorrichtung (11) einen im wesentlichen L-förmigen Bügel (20) sowie einen von dem Bügel (20) überdeckten Klipsarm (21) umfasst, wobei der Bügel (20) nach der Festlegung des Klemmteils (10) zumindest bereichsweise den Kragen (18) der auf den Zentralstecker aufgesteckten Zentralbuchse (12) übergreift und der Klipsarm (21) in eine korrespondierende Aussparung (23) der Zentralbuchse (12) eingreift.

7. Lenkstockschalter nach einem der Ansprüche 1 bis 4,
**dadurch gekennzeichnet, dass** die Sicherungsvorrichtung (11) einen parallel zur Schraubverbindung (14) des Klemmteils (10) ausgerichteten Stift (24) umfasst, der nach der Festlegung des Klemmteils (10) zum Eingreifen in eine korrespondierende Öffnung (24) der auf den Zentralstecker aufsteckbaren Zentralbuchse (12) dient.

8. Lenkstockschalter nach einem der Ansprüche 1 bis 4,
**dadurch gekennzeichnet, dass** die Sicherungsvorrichtung (11) einen parallel zu einer Stirnseite der Zentralbuchse (12) ausgerichteten Klipsarm (27) umfasst, der zum Eingreifen in eine korrespondierende Aussparung (28) der Zentralbuchse (12) nach der Festlegung des Klemmteils (10) beim Aufstecken der Zentralbuchse (12) auf den Zentralstecker dient.

## Claims

1. Steering column switch for a motor vehicle having a central plug for electric linkage to a central socket (12) of the on-board power supply and a centring sleeve (2) on the underside having a fastening device (8) for fixing on a jacket tube (3) which fastening device comprises a clamping part (10) acting on the jacket tube (3) and a receptacle (9) for guiding and mounting the clamping part (10) on which a securing device (11) for fixing the central socket (12) on the central plug is arranged, **characterised in that** the clamping part (10) comprises a lug (15) of wedge-shaped construction that can engage in friction-fitting and form-fitting manner into an oblong recess (16) of the jacket tube (3).

2. Steering column switch according to claim 1, **characterised in that** the clamping part (10) is fastened by a screw joint (14) in the receptacle (9) arranged tangentially on the centring sleeve (2).

3. Steering column switch according to claim 2, **characterised in that** a longitudinal axis of the screw joint (14) of the clamping part (10) is arranged offset at an angle to the central plug and the central socket (12).

4. Steering column switch according to claim 1, **characterised in that** the securing device (11) and the clamping part (10) are constructed in one piece.

5. Steering column switch according to any of claims 1 to 4, **characterised in that** the securing device (11) comprises a substantially U-shaped bracket (17) which after the clamping part (10) has been fixed engages over at least some areas of a collar (18) of the central socket (12) plugged onto the central plug.

6. Steering column switch according to any of claims 1 to 4, **characterised in that** the securing device (11) comprises a substantially L-shaped bracket (20) and a clip arm (21) covered by the bracket (20), wherein after the clamping part (10) has been fixed the bracket (20) engages over at least some areas of the collar (18) of the central socket (12) plugged onto the central plug and the clip arm (21) engages in a corresponding recess (23) of the central socket (12).

7. Steering column switch according to any of claims 1 to 4, **characterised in that** the securing device (11) comprises a pin (24) oriented parallel to the screw joint (14) of the clamping part (10) which pin after the clamping part (10) has been fixed serves to engage in a corresponding opening (24) of the central socket (12) that is pluggable onto the central plug.

8. Steering column switch according to any of claims 1 to 4, **characterised in that** the securing device (11) comprises a clip arm (27) oriented parallel to an end face of the central socket (12) which clip arm serves to engage in a corresponding recess (28) of the central socket (12) after the clamping part (10) has been fixed on plugging the central socket (12) onto the central plug.

## Revendications

1. Commutateur de colonne de direction pour un véhicule, avec une fiche centrale pour le couplage électrique à une prise centrale (12) du réseau de bord ainsi qu'avec un manchon de centrage inférieur (2) avec un dispositif de fixation (8) pour l'assujettir à un tube-corps (3), ledit dispositif de fixation comportant une partie de serrage (10) agissant sur le tube-corps (3) et un logement (9) pour guider et maintenir la partie de serrage (10) sur laquelle est disposé un dispositif de blocage (11) pour assujettir la prise centrale (12) sur la fiche centrale, **caractérisé en ce que** la partie de serrage (10) comporte un nez cunéiforme (15) apte à pénétrer par conjugaison de forces ainsi que de formes dans un évidement oblong (16) du tube-corps (3).

2. Commutateur de colonne de direction selon la revendication 1, **caractérisé en ce que** la partie de serrage (10) est fixée par une liaison vissée (14) dans le logement (9) disposé tangentiellement sur le manchon de centrage (2).

3. Commutateur de colonne de direction selon la revendication 2, **caractérisé en ce qu'**un axe longitudinal de la liaison vissée (14) de la partie de serrage (10) est disposé avec un décalage angulaire par rapport à la fiche centrale et à la prise centrale (12).

4. Commutateur de colonne de direction selon la revendication 1, **caractérisé en ce que** le dispositif de blocage (11) et la partie de serrage (10) sont conçus d'un seul tenant.

5. Commutateur de colonne de direction selon une des revendications 1 à 4, **caractérisé en ce que** le dispositif de blocage (11) comporte un étrier sensiblement en forme de U (17) qui, après l'assujettissement de la partie de serrage (10), entoure au moins par endroits un collet (18) de la prise centrale (12) emmanchée sur la fiche centrale.

6. Commutateur de colonne de direction selon une des revendications 1 à 4, **caractérisé en ce que** le dispositif de blocage (11) comporte un étrier sensiblement en forme de L (20) ainsi qu'un bras de clipsage (21) recouvert par l'étrier (20), l'étrier (20), après l'assujettissement de la partie de serrage (10), entourant au moins par endroits le collet (18) de la prise centrale (12) emmanchée sur la fiche centrale, et le bras de clipsage (21) pénétrant dans un évidement correspondant (23) de la prise centrale (12).

7. Commutateur de colonne de direction selon une des revendications 1 à 4, **caractérisé en ce que** le dispositif de blocage (11) comprend une broche (24) qui est orientée parallèlement à la liaison vissée (14) de la partie de serrage (10) et qui, après l'assujettissement de la partie de serrage (10), sert à s'engager dans une ouverture correspondante (24) de la prise centrale (12) apte à être emmanchée sur la fiche centrale.

8. Commutateur de colonne de direction selon une des revendications 1 à 4, **caractérisé en ce que** le dispositif de blocage (11) comprend un bras de clipsage (27) qui est orienté parallèlement à un côté frontal de la prise centrale (12) et qui, après l'assujettissement de la partie de serrage (10), sert à s'engager dans un évidement correspondant (28) de la prise centrale (12) lorsque la prise centrale (12) est emmanchée sur la fiche centrale.
